# EUROPEAN PATENT APPLICATION

(11) **EP 4 803 584 A1**
(43) Date of publication of application: **09.09.2026**
(21) Application number: 25162189.2
(22) Date of filing: 06.03.2025
(51) Int. Cl.: C09D 5/18, C09D 7/61, C09D 7/63

(54) **COATING COMPOSITION**

(71) Applicant: PPG Europe B.V., 1047 BB Amsterdam (NL)
(72) Inventor: ROGEMAN, Niklas, 1047 BB Amsterdam (NL); EVELAND, Henrik, 1047 BB Amsterdam (NL)
(74) Representative: Appleyard Lees IP LLP

(57) **Abstract**

The present disclosure relates to fire resistant aqueous coating compositions. In particular, the present disclosure relates to fire resistant aqueous coating compositions comprising:
(a) a first binder comprising a polymer formed from monomers including vinyl chloride, ethylene and vinyl ester;
(b) a second binder;
(c) a fire resistant extender in an amount of less than 30 dry wt%;
(d) a liquid carrier comprising water;
wherein dry wt% is the amount of a component based on the dry weight of the component relative to the total dry weight of the coating composition.

## Description

### Field of the Invention

The present disclosure relates to fire resistant aqueous coating compositions. In particular, the present disclosure relates to fire resistant aqueous coating compositions comprising:
(a) a first binder comprising a polymer formed from monomers including vinyl chloride, ethylene and vinyl ester;
(b) a second binder;
(c) a fire resistant extender in an amount of less than 30 dry wt%;
(d) a liquid carrier comprising water;
wherein dry wt% is the amount of a component based on the dry weight of the component relative to the total dry weight of the coating composition.

The disclosure also relates to a substrate coated on at least a portion thereof with a coating, the coating being derived from such a fire resistant aqueous coating composition.

### Background of the Invention

Many substrates, such as wood, when coated with a coating composition, such as a paint, may be more flammable or burnable relative to the same uncoated substrate. There is therefore a general need to provide coating compositions having low burnability, that is coating compositions which, when applied to substrates, impart the same or only a small increase in burnability. More preferable still are coating compositions which, when applied to a substrate, result in a coated substrate that exhibits lower burnability compared to the same uncoated substrate. In other words, coating compositions that act, amongst other effects, to reduce the flammability of a substrate, are desired.

Furthermore, coating compositions that comprise pigments, especially dark coloured pigments and/or IR-reflective pigments, tend to exhibit higher burnability relative to compositions that do not contain said pigments. There is a general desire to provide pigmented coating compositions exhibiting reduced burnability.

The burnability of coating compositions may be reduced by adding additives such as flame retardants, for example. Flame retardants include compounds that are decomposed by heat into non-flammable components. However, flame retardants, especially in large quantities, can negatively affect various properties and/or characteristics of coating compositions, such as drying time, gloss, and/or long term stability. This can be particularly problematic in decorative paints. For example, adding large quantities of fire retardant extenders can result in unacceptable loss of gloss and other aesthetic properties, such as lightening of pigmentation.

It is an object of aspects of the present disclosure to address one or more of the above-mentioned or other problems.

### Summary of the Invention

According to the present disclosure, there is provided a fire resistant aqueous coating composition comprising:
(a) a first binder comprising a polymer formed from monomers including vinyl chloride, ethylene and vinyl ester;
(b) a second binder;
(c) a fire resistant extender in an amount of less than 30 dry wt%;
(d) a liquid carrier comprising water;
wherein dry wt% is the amount of a component based on the dry weight of the component relative to the total dry weight of the coating composition.

There is also provided a substrate coated on at least a portion thereof with a coating, the coating being derived from a coating composition comprising:
(a) a first binder comprising a polymer formed from monomers including vinyl chloride, ethylene and vinyl ester;
(b) a second binder;
(c) a fire resistant extender in an amount of less than 30 dry wt%;
(d) a liquid carrier comprising water;
wherein dry wt% is the amount of a component based on the dry weight of the component relative to the total dry weight of the coating composition.

There is also provided a substrate coated on at least a portion thereof with a coating system, the coating system comprising:
(i) at least one primer layer, the or each primer layer being derived from a fire resistant aqueous coating comprising:
   (a) a first binder comprising a polymer formed from monomers including vinyl chloride, ethylene and vinyl ester;
   (b) a second binder;
   (c) a fire resistant extender in an amount of less than 30 dry wt%;
   (d) a liquid carrier comprising water;
      wherein dry wt% is the amount of a component based on the dry weight of the component relative to the total dry weight of the coating composition.
(ii) at least one topcoat layer disposed on at least a portion of the primer layer, the or each topcoat layer being derived from a topcoat coating composition.

There is also provided a use of a fire resistant aqueous coating composition to reduce the burnability of a burnable substrate, the coating composition comprising:
(a) a first binder comprising a polymer formed from monomers including vinyl chloride, ethylene and vinyl ester;
(b) a second binder;
(c) a fire resistant extender in an amount of less than 30 dry wt%;
(d) a liquid carrier comprising water;
wherein dry wt% is the amount of a component based on the dry weight of the component relative to the total dry weight of the coating composition.

### Detailed Description of the Invention

The present disclosure relates to a fire resistant aqueous coating composition, herein also referred to as a coating composition. Herein, "fire resistant", also referred to as "burnability", means having the property of resisting ignition by heat flux for a period of time and/or reducing the energy release rate after ignition.

### First Binder

The coating composition comprises a first binder and a second binder. The first binder and second binder are chemically different from one another.

The first binder comprises a polymer formed from monomers including vinyl chloride, ethylene and vinyl ester. That is, the coating composition comprises a polymeric material comprising vinyl chloride, ethylene and vinyl ester as the principal monomer components. Optionally, the first binder may include minor amounts of other monomer components which may be included to provide specific benefits.

The first binder comprising a polymer formed from monomers include vinyl chloride, ethylene and vinyl ester is chemically different from the second binder in the coating composition of the present disclosure.

The amount of a component in the coating composition may be described by its weight percentage (wt%), otherwise known as mass fraction. Herein, the weight percentage (wt%) of a component of the coating composition may be defined as the weight contribution, or mass, of a component in the coating composition relative to the total weight, or total mass, of the coating composition. In other words, wt% may define the amount of a component in the coating composition based on the weight of a component relative to the total weight of a coating composition.

A component of the coating composition may be described by its percentage solids content (%SC), also known as solids content. Herein, the percentage solids content (%SC) of a component of the coating composition may be defined as the dry weight of the component (i.e. excluding solvent(s), which includes organic solvents and water) relative to the total weight, or total mass, of said component (i.e. including solvent(s), which includes organic solvents and water). A coating composition itself may also be described by its percentage solids content, being the dry weight of the coating composition (i.e. excluding solvent(s), which includes organic solvents and water) relative to the total weight of the coating composition (i.e. including solvent(s), which includes organic solvents and water).

The amount of a component in the coating composition may be described by its dry weight percentage (dry wt%). Herein, the dry weight percentage (dry wt%) of a component of the coating composition may be defined as the percentage solids content of a component relative to the total percentage solids content of the coating composition. In other words, dry wt% may define the amount of a component in the coating composition based on the dry weight of a component relative to the total dry weight of the coating composition. That is, dry wt% may define the amount of a component in the coating composition based on the solids content of a component relative to the total solids content of the coating composition.

The coating composition may comprise the first binder in an amount of at least 1 dry wt%, such as at least 5 dry wt%, such as at least 10 dry wt%, such as at least 15 dry wt%, such as at least 20 dry wt%, such as at least 25 dry wt%, such as at least 30 dry wt%, such as at least 35 dry wt%, such as at least 40 dry wt%, such as at least 45 dry wt%, such as at least 50 dry wt%, such as at least 55 dry wt%, such as at least 60 dry wt%, such as at least 65 dry wt%, such as at least 70 dry wt%.

The coating composition may comprise the first binder in an amount of up to 80 dry wt%, such as up to 75 dry wt%, such as up to 70 dry wt%, such as up to 65 dry wt%, such as up to 60 dry wt%, such as up to 55 dry wt%, such as up to 50 dry wt%, such as up to 45 dry wt%, such as up to 40 dry wt%. The coating composition may comprise the first binder in an amount of 1, 5, 10, 15, 20, 25, 30, 35, 40, 45, 50, 55, 60, 65 or 70 to 80 dry wt%. The coating composition may comprise the first binder in an amount of 1, 5, 10, 15, 20, 25, 30, 35, 40, 45, 50, 55, 60, 65 or 70 to 75 dry wt%. The coating composition may comprise the first binder in an amount of 1, 5, 10, 15, 20, 25, 30, 35, 40, 45, 50, 55, 60 or 65 to 70 dry wt%. The coating composition may comprise the first binder in an amount of 1, 5, 10, 15, 20, 25, 30, 35, 40, 45, 50, 55 or 60 to 65 dry wt%. The coating composition may comprise the first binder in an amount of 1, 5, 10, 15, 20, 25, 30, 35, 40, 45, 50 or 55 to 60 dry wt%. The coating composition may comprise the first binder in an amount of 1, 5, 10, 15, 20, 25, 30, 35, 40, 45 or 50 to 55 dry wt%. The coating composition may comprise the first binder in an amount of 1, 5, 10, 15, 20, 25, 30, 35, 40 or 45, to 50 dry wt%. The coating composition may comprise the first binder in an amount of 1, 5, 10, 15, 20, 25, 30, 35 or 40 to 45 dry wt%. The coating composition may comprise the first binder in an amount of 1, 5, 10, 15, 20, 25, 30 or 35 to 40 dry wt%

The coating composition may comprise the first binder in an amount of from 5 to 80 dry wt%. The coating composition may comprise the first binder in an amount from 10 to 75 dry wt%. The coating composition may comprise the first binder in an amount from 15 to 70 dry wt%. The coating composition may comprise the first binder in an amount from 20 to 65 dry wt%. The coating composition may comprise the first binder in an amount from 25 to 60 dry wt%. The coating composition may comprise the first binder in an amount of from 20 to 40 dry wt%. The coating composition may comprise the first binder in an amount from 25 to 35 dry wt%.

The coating composition may comprise the first binder in an amount of from 40 to 70 dry wt%.

The coating composition may comprise the first binder in an amount of from 50 to 60 dry wt%.

### Second Binder

The coating composition comprises a second binder. The second binder and first binder are chemically different from one another.

The second binder may comprise any suitable material. The second binder may comprise at least one material selected from an acrylic material, a polyurethane material, a vinyl acetate material, a polyurethane-acrylic material, an epoxy material, a styrene-acrylic material, a styrene-butadiene material, a polystyrene material, a vinyl acrylic material, a vinyl acetate-ethylene material, an alkyd-acrylic and an alkyd material.

The second binder may comprise at least one material selected from an acrylic material, a polyurethane material, and a modified polyurethane material, such as a polyurethane-alkyd material. The second binder may comprise an acrylic and/or vinyl acrylic material. The acrylic material may comprise the reaction product of a reaction mixture comprising one or more acrylic monomer(s). Suitable acrylic monomers will be known to a person skilled in the art. Suitable acrylic monomers include, but are not limited to, alkyl (alk)acrylate, such as C₁ to C₆ alkyl (C₁ to C₆ alk)acrylate, for example, C₁ to C₆ alkyl (meth)acrylate, and (alk)acrylic acid, such as (C₁ to C₆ alk)acrylic acid. The acrylic monomer may comprise a functional group, such as an epoxy group. For example, the acrylic monomer may comprise glycidyl methacrylate.

The terms "(alk)acrylate", "(meth)acrylate", and like terms as used herein, are used conventionally and refer to both alkacrylate and acrylate, such as methacrylate and acrylate.

Examples of suitable acrylic monomers include, but are not limited to, acrylic acid, methacrylic acid, methyl acrylate; methyl methacrylate; ethyl acrylate; ethyl methacrylate; propyl acrylate; propyl methacrylate; isopropyl methacrylate, butyl acrylate, including n-butyl acrylate, isobutyl acrylate, sec-butyl acrylate and tert-butyl acrylate; butyl methacrylate, including n-butyl methacrylate, sec-butyl methacrylate, isobutyl methacrylate and tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, decyl acrylate, decyl methacrylate, isodecyl acrylate, isodecyl methacrylate, lauryl acrylate, lauryl methacrylate, octyl acrylate, octyl methacrylate, nonyl acrylate, nonyl methacrylate, isobornyl acrylate, isobornyl methacrylate, hydroxyethyl acrylate, hydroxyethyl methacrylate, hydroxypropyl methacrylate, hydroxypropyl acrylate, phenoxy ethyl acrylate, 2-ethylhexyl acrylate, 2-ethylhexyl methacrylate, glycidyl methacrylate; the reaction product of (meth)acrylic acid reacted with an epoxy, such as the reaction product of (meth)acrylic acid reacted with Cardura (RTM) E10P glycidyl ester; ethylene glycol diacrylate; ethylene glycol dimethacrylate; 1,6-hexanediol diacrylate; 1,6-hexanediol dimethacrylate; 4-hydroxybutyl acrylate; 4-hydroxybutyl methacrylate; allyl methacrylate; benzyl acrylate; benzyl methacrylate; phosphate esters of 2-hydroxyethyl methacrylate; those sold under the trade name SIPOMER commercially available from Solvay) such as, for example SIPOMER PAM-100, SIPOMER PAM-200 and SIPOMER PAM-300 (phosphate esters of polypropylene glycol monoacrylate); and SIPOMER WAM, SIMPOMER WAM II and SIPOMER WAM E W50 (methacrylic monomer based on 46-50% methacrylamidoethyl ethylene urea), ureido (meth)acrylate (commercially available from BASF), rosin (meth)acrylate, cardanyl (meth)acrylate, cardanol (meth)acrylate, acrylamides such as, for example, acrylamide methacrylamide, N,N-dimethylacrylamide, N-ethylacrylamide, N-hydroxyethyl acrylamide, diacetone acrylamide, N,N-diethylacrylamide, N-isopropylacrylamide and N-isopropylmethacrylamide; 2-acrylamido-2-methyl-1-propanesulfonic acid; silane-functional (alk)acrylic acids and/or (alk)acrylates such as, for example, 3-(trimethoxysilyl)propyl methacrylate (also known as silane A174, commercially available from Sigma Aldrich) and 3-(trimethoxysilyl)propyl acrylate (commercially available from Sigma Aldrich); and combinations thereof. Any other acrylic monomers known to those skilled in the art could also be used.

The acrylic monomer may comprise a hydroxyl functional acrylic monomer. The acrylic monomer may comprise a hydroxyl functional alkyl(alk)acrylate, for example, hydroxyl functional C₁ to C₆ alkyl (C₁ to C₆ alk)acrylate, such as hydroxyl functional C₁ to C₆ alkyl (meth)acrylate or hydroxyl functional C₁ to C₆ alkyl (C₁ to C₆ alk)acrylate. Examples of suitable hydroxyl functional acrylic monomer(s) include, but are not limited to, hydroxyethyl acrylate, hydroxyethyl methacrylate, hydroxymethyl acrylate, hydroxymethyl methacrylate, hydroxypropyl acrylate, hydroxypropyl methacrylate, hydroxybutyl acrylate, hydroxybutyl methacrylate, hydroxypentyl acrylate, hydroxypentyl methacrylate, hydroxyhexyl acrylate, hydroxyhexyl methacrylate, methyl 2-(hydroxymethyl)acrylate ethyl 2-(hydroxymethyl)acrylate, polyethylene glycol methacrylate and/or polypropylene glycol methacrylate. The hydroxyl functional acrylic monomer may comprise hydroxyethyl acrylate, hydroxyethyl methacrylate, the reaction product of (meth)acrylic acid reacted with an epoxy, such as the reaction product of (meth)acrylic acid with Cardura (RTM) E10P glycidyl ester, polyethylene glycol methacrylate and/or polypropylene glycol methacrylate.

The acrylic monomer may comprise two or more acrylate groups. For example, the acrylic monomer may comprise two, three, four or more acrylate groups. For the avoidance of doubt, by "acrylate group", and like terms as used herein, is meant salts and esters of acrylic acid, i.e. monomers having the structure R-C=CCOO-R¹, wherein R represents hydrogen, alkyl, alkenyl alkynyl, aralkyl or aryl and R¹ represents hydrogen, alkyl, alkenyl alkynyl, aralkyl or aryl. The acrylic monomer may comprise a di(alk)acrylate. Suitable di(alk)acrylates will be known to a person skilled in the art. Examples of suitable di(alk)acrylates include, but are not limited to, ethylene glycol diacrylate, ethylene glycol dimethacrylate, 1,2-propanediol diacrylate, 1,3-propanediol diacrylate, 1,3-butanediol diacrylate, 1,4-butanediol diacrylate, 1,2-petanediol diacrylate, 1,3-petanediol diacrylate, 1,5-petanediol diacrylate, 1,2-hexanediol diacrylate, 1,3-hexanediol diacrylate, 1,4-hexanediol diacrylate, 1,6-hexanediol diacrylate, 1,2-propanediol dimethacrylate, 1,3-propanediol dimethacrylate, 1,3-butanediol dimethacrylate, 1,4-butanediol dimethacrylate, 1,2-petanediol dimethacrylate, 1,3-petanediol dimethacrylate, 1,5-petanediol dimethacrylate, 1,2-hexanediol dimethacrylate, 1,3-hexanediol dimethacrylate, 1,4-hexanediol dimethacrylate, 1,6-hexanediol dimethacrylate and combinations thereof. The acrylic monomer may comprise a tri(alk)acrylate. Suitable tri(alk)acrylates will be known to a person skilled in the art. Examples of suitable tri(alk)acrylates include, but are not limited to, trimethylolpropane triacrylate, trimethylolpropane trimethacrylate and combinations thereof.

The reaction mixture from which the acrylic material is formed may further comprise one or more additional ethylenically unsaturated monomer(s). Suitable additional ethylenically unsaturated monomers will be known to a person skilled in the art. Examples of suitable additional ethylenically unsaturated monomers include, but are not limited to, aryl substituted ethylenically unsaturated monomers such as, for example, styrene, alpha-methyl styrene, 3,4-alpha-methyl styrene, 2-methyl styrene, 4-methyl styrene (vinyl toluene), 2,3-dimethyl styrene, 2-ethyl styrene, 4-tertbutylstyrene, 4-methoxystyrene, 4-phenylstyrene, 4-phenoxy styrene, 4-propyl styrene, 4-benzylstyrene, 4-cyclohexyl styrene, 4-dodecyl styrene, 4-(phenyl butyl)styrene, 2-methyl-4-isopopyl styrene, 2-ethyl-4-benzyl styrene, 4-chlorostyrene, 2,5-dichlorostyrene, 3,4-dichlorostyrene, 2,6-dichlorostyrene, 4-fluorostyrene, divinylbenzene, isopropyl styrene, t-butyl styrene, trans-beta-styrene, chloromethylstyrene, 4-hydroxystyrene, diglycidyloxymethylstyrene, 2,4-diglycidyloxymethylstyrene, 2,5-diglycidyloxymethylstyrene, 2,6-diglycidyloxymethylstyrene, 2,3,4-triglycidyloxymethylstyrene, 2,3,5-triglycidyl oxime styrene, 2,3,6-triglycidyloxymethylstyrene and 3,4,5-triglycidyloxymethylstyrene, 2,4,6-triglycidyloxymethylstyrene, unsaturated carboxylic acids or diacids (or anhydrides) such as, for examples, maleic acid (or anhydride) and itaconic acid (or anhydride), ethylenically unsaturated nitriles such as, for example, acrylonitrile or methacrylonitrile, vinyl esters such as, for example, vinyl acetate and vinyl propionate, alkenes, such as C₂ to C₆ alkenes, for example, ethene, propene, 1-butene, 2-butene, 1-pentene, 2-pentene, 1-hexene, 2-hexene, 3-hexene, 1-hetpene, 2-heptene, 3-heptene, 1-octene, 2-octene, 3-octene, 4-octene and isobutylene, vinyl chloride, butadiene, isoprene, chloroprene, N-vinyl monomers such as, for example, N-vinyl pyrrolidone, N-vinyl caprolactam and N-vinyl acetamide, unsaturated fatty acid ester; allyl glycidyl ether, allyl ethyl ether, vinyl ether monomers such as, for example, methyl vinyl ether, ethyl vinyl ether, n-propyl vinyl ether, isopropyl vinyl ether, n-butyl vinyl ether, isobutyl vinyl ether, t-butyl vinyl ether, pentyl vinyl ether, cyclopentyl vinyl ether, hexyl vinyl ether, cyclohexyl vinyl ether, 2-ethylhexyl vinyl ether, 2-hydroxyethyl vinyl ether, 4-hydroxybutyl vinyl ether, 1,4-butanediol divinyl ether, diethyleneglycol divinyl ether, triethyleneglycol divinyl ether, 1,4-cyclohexanedimethanol divinyl ether, 2-(2-hydroxyethyl) ethyl vinyl ether, octyl vinyl ether, benzyl vinyl ether, phenyl vinyl ether, phenethyl vinyl ether and allyl vinyl ether, vinylphosphoric acid (commercially available from Sigma Aldrich) and combinations thereof. The additional ethylenically unsaturated monomer(s) may comprise monomers, oligomers and/or polymers of the aforementioned monomers. For example, butadiene may be in the form of a monomer or may be in the form of polybutadiene.

The additional ethylenically unsaturated monomer(s) may comprise terpene monomers or derivatives thereof, rosin monomers or derivatives thereof, cardanol monomers or derivatives thereof. Examples of suitable terpene monomers or derivatives thereof include, but are not limited to, monoterpenes such as, for example, α-pinene, β-pinene, camphene, sabinene, limonene and myrcene, sesquiterpenes such as, for example, bisabolene and nerolidol, and diterpenes. Examples of suitable rosin monomers or derivates thereof include, but are not limited to, rosin, rosin acids, abietic acid, neabietic acid, palustric acid, pimaric acid, levopimaric acid, maleopimaric acid, fumaropimaric acid, isopimaric acid, rosin-formaldehyde resin, rosin alcohol and rosin phenol. Examples of suitable cardanol monomers or derivatives thereof of include, but are not limited to cardanol, anacardic acid, cardanol glycidyl ether, cardanol-formaldehyde resin, cardanol epoxies, cardanol phenols and cardanol alcohols.

The additional ethylenically unsaturated monomer may comprise a hydroxyl functional ethylenically unsaturated monomer. The hydroxyl functional ethylenically unsaturated monomer may comprise N-hydroxyethyl acrylamide, 2-hydroxyethyl vinyl ether, 4-hydroxybutyl vinyl ether, 2-(2-hydroxyethyl) ethyl vinyl ether, and/or hydroxystyrene. The hydroxyl functional ethylenically unsaturated monomer may comprise the reaction product of (meth)acrylic acid with an epoxy (such as Cardura E10) and/or the reaction product of glycidyl methacrylate with a carboxylic acid functional component (such as a benzoic acid and/or an aliphatic acid, such as a C₂-C₂₀ aliphatic acid, for example).

The acrylic material may comprise any suitable amount of acrylic monomer. It will be appreciated that the acrylic material comprises at least one acrylic monomer.

The second binder may comprise a polyurethane material. The polyurethane material may comprise a urethane (carbamate) linkage in the backbone of the polymer. The polyurethane material may comprise a urethane (carbamate) linkage and an imide linkage in the backbone of the polymer.

The polyurethane material may be formed from an imide containing moiety.

The imide containing moiety may contain a cyclic imide group.

The imide containing moiety may be formed as a reaction product between an amine or an isocyanate, such as a diisocyanate, with a cyclic anhydride.

The amine may comprise a primary amine. Examples of suitable amines include, but are not limited to, diamines such as, for example, ethylene diamine, 1,3-propane diamine, tetramethylene diamine, 1,6-hexane diamine, trimethyl hexane-1,6-diamine, isophrone diamine, diaminodiphenylmethane (methylene dianaline), diaminodiphenylether, diaminodiphenylsulphone, methylene-4,4'-cyclohexyl diamine, benzoguanamine, ortho-xylylene diamine, meta-xylylene diamine, para-xylylenediamine, 1,2- cyclohexanediamine and 1,4-cyclohexanediamine; hydroxyamines such as, for example, monoethanol amine and monopropanolamine; aminocarboxylic acids such as, for example, glycine; aminopropionic acids; amino benzoic acids; and combinations thereof.

Examples of suitable isocyanates include, but are not limited to, diisocyanates such as, for example, hexamethylene di-isocyanate, tetramethylene di-isocyanate, isophorone di-isocyanate, methylene-4,4'-bis (cyclohexyl isocyanate), bis-(4-isocyanatocyclohexyl)methane, methylene di phenyl di-isocyanate, bis-(4-isocyanatophenyl)methane, tetramethyl-meta-xylylene di-isocyanate, meta xylylene di-isocyanate, para xylylene di-isocyanate, cyclohexane di-isocyanate, naphthalene di-isocyanate and trimethyl hexamethylene di-isocyanate; and combinations thereof.

Examples of suitable cyclic anhydrides include, but are not limited to, trimellitic anhydride; pyromellitic di-anhydride; maleic anhydride; 3,3',4,4'-benzophenonetetracarboxylic dianhydride; tetrahydrophthalic anhydride; 1,4,5-naphthalenetricarboxylic anhydride; 1,4,5,8-naphthalenetetracarboxylic dianhydride; hemimellitic anhydride; and combinations thereof.

The imide containing moiety may also comprise an acid group and/or an alcohol group. The imide containing moiety may be an acid substituted imide. By "acid substituted imide", and like terms as used herein, is meant an imide containing moiety which comprises at least one carboxylic acid group. The imide containing moiety may also comprise an amine or isocyanate group. Thus, the imide containing moiety may comprise an imide linkage, an acid group and an amine or isocyanate group. For example, such moieties may be formed from the reaction of a trifunctional acid or anhydride thereof, such as trimellitic anhydride, with a diamine or diisocyanate.

The polyurethane material may be formed by reaction of an imide containing moiety, such as one or more of the imide containing moieties described above, with a hydroxyl functional component, such as one or more of the alcohols described below, and an isocyanate, such as one or more of the isocyanates described above, to thereby form a polyurethane material.

The polyurethane material may be formed by reaction in the presence of an alcohol, diol, polyol or a component containing at least one alcohol group.

"Polyol" and like terms, as used herein, refers to a compound having two or more hydroxyl groups, such as two, three or four hydroxyl groups. The hydroxyl groups of the polyol may be connected by a bridging group selected from: an alkylene group; an alkenylene group; an alkynylene group; or an arylene group. The polyol may be an organic polyol.

"Diol" and like terms, as used herein, refers to a compound having two hydroxyl groups. The hydroxyl groups of the diol may be connected by a bridging group selected from: an alkylene group; an alkenylene group; an alkynylene group; or an arylene group. The diol may be an organic polyol.

Examples of suitable diols include, but are not limited to, the following: ethylene glycol; 1,2-propane diol; 1,3-propane diol; 1,2-butanediol; 1,3-butandiol; 1,4-butanediol; 2,3-butane diol; 2-methyl-1,3-propane diol; 2,2'-dimethyl-1,3-propanediol; 1,5-pentane diol; 3-methyl-1,5-pentanediol; 1,6-hexane diol; diethylene glycol; triethylene glycol; dipropylene glycol; tripropylene glycol; 2,2,4-trimethyl pentane-1,3-diol; 1,4-cyclohexane dimethanol; tricyclodecane dimethanol; 2,2,4,4-tetramethyl cyclobutane-1,3-diol; isosorbide; 1,4-cyclohexane diol; 1,1'-isopropylidene-bis-(4 -cyclohexanol); polyether diols, such as polyethylene glycol diol, polypropyleneglycol diol and polytetrahydrofuran diol; polysiloxanes diols, such as polydimethylsiloxane diol, polydiphenylsiloxane diol and polymethylphenylsiloxane diol; and combinations thereof.

Examples of suitable polyols include, but are not limited to, the following: tris (hydroxyethyl)isocyanurate; trimethylol propane; trimethylol ethane; 1,2,6-hexane triol; pentaerythritol; erythritol; di-trimethylol propane; di-pentaerythritol; N,N,N',N'-tetra (hydroxyethyl)adipindiamide; N,N,N',N'-tetra (hydroxypropyl)adipindiamide; tri(hydroxy ethyl) amine; hexahydro-1,3,5-tris(hydroxyethyl)-s-triazine; N,N,N',N'-tetrakis-(hydroxyethyl)ethylenediamine; di ethanol amine; or combinations thereof.

The polyurethane material may be formed by reaction in the presence of a carboxylic acid, diacid, polyacid or a component containing at least one carboxylic acid group.

"Polyacid" and like terms, as used herein, refers to a compound having two or more carboxylic acid groups, such as two, three or four carboxylic acid groups. The carboxylic acid groups of the polyacid may be connected by a bridging group selected from: an alkylene group; an alkenylene group; an alkynylene group; or an arylene group. The polyacid may be an organic polyacid.

"Diacid" and like terms as used herein, refers to a compound having two carboxylic acid groups and includes an ester of the diacid (wherein an acid group is esterified) or an anhydride. The carboxylic acid groups of the diacid may be connected by a bridging group selected from: an alkylene group; an alkenylene group; an alkynylene group; or an arylene group. The diacid may be an organic diacid.

Examples of suitable diacids include, but are not limited to, the following: isophthalic acid; terephthalic acid; 1,4-cyclohexane dicarboxylic acid; succinic acid; adipic acid; azelaic acid; sebacic acid; fumaric acid; 2,6-naphthalene dicarboxylic acid; orthophthalic acid. Diacids can also be used in the form of the diester materials, such as: dimethyl ester derivatives such as dimethyl isophthalate; dimethyl terephthalate; dimethyl-1,4-cyclohexane dicarboxylate; dimethyl-2,6-naphthalene dicarboxylate; dimethyl fumarate; dimethyl orthophthalate; dimethylsuccinate; dimethyl glutarate; dimethyl adipate; or combinations thereof.

The term "alk" or "alkyl", as used herein unless otherwise defined, relates to saturated hydrocarbon radicals being straight, branched, cyclic or polycyclic moieties or combinations thereof and contain 1 to 20 carbon atoms, such as 1 to 10 carbon atoms, such as 1 to 8 carbon atoms, such as 1 to 6 carbon atoms, or even 1 to 4 carbon atoms. These radicals may be optionally substituted with a chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, aryl or Het, wherein R¹⁹ to R²⁷ each independently represent hydrogen, aryl or alkyl, and/or be interrupted by oxygen or sulphur atoms, or by silano or dialkylsiloxane groups. Examples of such radicals may be independently selected from methyl, ethyl, n-propyl, isopropyl, n-butyl, isobutyl, sec-butyl, tert-butyl, 2-methylbutyl, pentyl, iso-amyl, hexyl, cyclohexyl, 3-methylpentyl, octyl and the like. The term "alkylene", as used herein, relates to a bivalent radical alkyl group as defined above. For example, an alkyl group such as methyl which would be represented as -CH₃, becomes methylene, -CH₂-, when represented as an alkylene. Other alkylene groups should be understood accordingly.

The term "alkenyl", as used herein, relates to hydrocarbon radicals having, such as up to 4, double bonds, being straight, branched, cyclic or polycyclic moieties or combinations thereof and containing from 2 to 18 carbon atoms, such as 2 to 10 carbon atoms, such as from 2 to 8 carbon atoms, such as 2 to 6 carbon atoms, or even 2 to 4 carbon atoms. These radicals may be optionally substituted with a hydroxyl, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or alkyl, and/or be interrupted by oxygen or sulphur atoms, or by silano or dialkylsiloxane groups. Examples of such radicals may be independently selected from alkenyl groups include vinyl, allyl, isopropenyl, pentenyl, hexenyl, heptenyl, cyclopropenyl, cyclobutenyl, cyclopentenyl, cyclohexenyl, 1-propenyl, 2-butenyl, 2-methyl-2-butenyl, isoprenyl, farnesyl, geranyl, geranylgeranyl and the like. The term "alkenylene", as used herein, relates to a bivalent radical alkenyl group as defined above. For example, an alkenyl group such as ethenyl which would be represented as -CH=CH2, becomes ethenylene, -CH=CH-, when represented as an alkenylene. Other alkenylene groups should be understood accordingly.

The term "alkynyl", as used herein, relates to hydrocarbon radicals having, such as up to 4, triple bonds, being straight, branched, cyclic or polycyclic moieties or combinations thereof and having from 2 to 18 carbon atoms, such as 2 to 10 carbon atoms, such as from 2 to 8 carbon atoms, such as from 2 to 6 carbon atoms, or even from 2 to 4 carbon atoms. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by oxygen or sulphur atoms, or by silano or dialkylsiloxane groups. Examples of such radicals may be independently selected from alkynyl radicals include ethynyl, propynyl, propargyl, butynyl, pentynyl, hexynyl and the like. The term "alkynylene", as used herein, relates to a bivalent radical alkynyl group as defined above. For example, an alkynyl group such as ethynyl which would be represented as -C≡CH, becomes ethynylene, -C≡C-, when represented as an alkynylene. Other alkynylene groups should be understood accordingly.

The term "aryl" as used herein, relates to an organic radical derived from an aromatic hydrocarbon by removal of one hydrogen, and includes any monocyclic, bicyclic or polycyclic carbon ring of up to 7 members in each ring, wherein at least one ring is aromatic. These radicals may be optionally substituted with a hydroxy, chloro, bromo, iodo, cyano, nitro, OR¹⁹, OC(O)R²⁰, C(O)R²¹, C(O)OR²², NR²³R²⁴, C(O)NR²⁵R²⁶, SR²⁷, C(O)SR²⁷, C(S)NR²⁵R²⁶, or aryl, wherein R¹⁹ to R²⁷ each independently represent hydrogen, aryl or lower alkyl, and/or be interrupted by oxygen or sulphur atoms, or by silano or dialkylsilcon groups. Examples of such radicals may be independently selected from phenyl, p-tolyl, 4-methoxyphenyl, 4-(tert-butoxy)phenyl, 3-methyl-4-methoxyphenyl, 4-fluorophenyl, 4-chlorophenyl, 3-nitrophenyl, 3-aminophenyl, 3-acetamidophenyl, 4-acetamidophenyl, 2-methyl-3-acetamidophenyl, 2-methyl-3-aminophenyl, 3-methyl-4-aminophenyl, 2-amino-3-methylphenyl, 2,4-dimethyl-3-aminophenyl, 4-hydroxyphenyl, 3-methyl-4-hydroxyphenyl, 1-naphthyl, 2-naphthyl, 3-amino-1-naphthyl, 2-methyl-3-amino-1-naphthyl, 6-amino-2-naphthyl, 4,6-dimethoxy-2-naphthyl, tetrahydronaphthyl, indanyl, biphenyl, phenanthryl, anthryl or acenaphthyl and the like. The term "arylene", as used herein, relates to a bivalent radical aryl group as defined above. For example, an aryl group such as phenyl which would be represented as -Ph, becomes phenylene, -Ph-, when represented as an arylene. Other arylene groups should be understood accordingly.

For the avoidance of doubt, the reference to alkyl, alkenyl, alkynyl, aryl or aralkyl in composite groups herein should be interpreted accordingly, for example the reference to alkyl in aminoalkyl or alk in alkoxyl should be interpreted as alk or alkyl above etc.

The second binder may comprise an alkyd material. Alkyd materials are well-known in the art. The properties of an alkyd material are primarily determined by the nature and the ratios of the alcohols and acids used and by the degree of condensation. Suitable alkyds include long oil, very long oil and medium oil alkyd resins, e.g. derived from 45 to 85 wt% of fatty acids, such as derived from 45 to 70 wt% of fatty acids. As used herein, the term "long oil alkyd" refers to alkyds with an oil content of between 60 and 75 wt%, and a fatty acid content of 57 to 70 wt%. As used herein, the term "medium oil alkyd" refers to alkyds with an oil content of between 45 wt% and 60 wt%, and a fatty acid content of 42 to 57 wt%. As used herein, the term "very long oil alkyd" refers to alkyds with an oil content of between 75 and 85 wt%, and a fatty acid content of 70 to 80 wt%. The alkyd may comprise a medium oil alkyd. The alkyd may comprise a long oil alkyd. The alkyd may comprise a very long oil alkyd.

The alkyd material may comprise the condensation product of soybean oil fatty acids, benzoic acid, pentaerythritol and phthalic anhydride, for example having CAS number 6722-76-3.

The composition of the long oil and medium oil alkyd may be modified. For example, polyurethane modified alkyds, silicone modified alkyds, styrene modified alkyds, acrylic modified alkyds (e.g. (meth)acrylic modified alkyds), vinylated alkyds, polyamide modified alkyds, and epoxy modified alkyds or mixtures thereof are also suitable alkyd materials.

The alkyd material, which may be autooxidisable, may comprise a medium or long oil unmodified alkyd, a silicone modified alkyd, a polyurethane modified alkyd, acrylic modified alkyd, polyamide modified alkyd, an epoxy modified alkyd, or a combination thereof. The alkyd material may comprise a long oil (unmodified) alkyd, a silicone modified alkyd, a polyurethane modified alkyd, acrylic modified alkyd, polyamide modified alkyd, an epoxy modified alkyd, or a combination thereof.

For example, the second binder may comprise an acrylic material and a modified polyurethane material, such as a polyurethane modified alkyd material.

The second binder may have any suitable weight average molecular weight (Mw). The second binder may have a Mw of at least 5,000 g/mol, such as at least 10,000 g/mol, such as at least 15,000 g/mol, such as at least 20,000 g/mol, such as at least 30,000 g/mol, such as at least 50,000 g/mol, such as at least 100,000 g/mol, such as at least 150,000 g/mol, such as at least 200,000 g/mol, such as at least 400,000 g/mol, such as at least 600,000 g/mol, such as at least 800,000 g/mol, or even at least 1,000,000 g/mol, as determined according to ISO 16014-1. All values for Mw reported herein were measured in this way unless specified otherwise.

The coating composition may comprise the second binder in any suitable amount. The coating composition may comprise the second binder in an amount of at least 0.01 dry wt%, such as at least 0.1 wt%, such as at least 0.5 dry wt%, such as at least 1 dry wt%, such as at least 1.5 dry wt%, such as at least 2 dry wt%.

The coating composition may comprise the second binder in an amount of up to 60 dry wt%, such as up to 55 dry wt%, such as up to 50 dry wt%, such as up to 45 dry wt%, such as up to 40 dry wt%, such as up to 35 dry wt%, such as up to 30 dry wt%, such as up to 25 dry wt%, such as up to 20 dry wt%, such as up to 15 dry wt%, such as up to 10 dry wt%, such as up to 8 dry wt%, such as up to 5 dry wt%.

The coating composition may comprise the second binder in an amount of from 0.01, 0.1, 0.5, 1, 1.5 or 2 to 60 dry wt%. The coating composition may comprise the second binder in an amount of from 0.01, 0.1, 0.5, 1, 1.5 or 2 to 55 dry wt%. The coating composition may comprise the second binder in an amount of from 0.01, 0.1, 0.5, 1, 1.5 or 2 to 50 dry wt%. The coating composition may comprise the second binder in an amount of from 0.01, 0.1, 0.5, 1, 1.5 or 2 to 45 dry wt%. The coating composition may comprise the second binder in an amount of from 0.01, 0.1, 0.5, 1, 1.5 or 2 to 40 dry wt%. The coating composition may comprise the second binder in an amount of from 0.01, 0.1, 0.5, 1, 1.5 or 2 to 35 dry wt%. The coating composition may comprise the second binder in an amount of from 0.01, 0.1, 0.5, 1, 1.5 or 2 to 30 dry wt%. The coating composition may comprise the second binder in an amount of from 0.01, 0.1, 0.5, 1, 1.5 or 2 to 25 dry wt%. The coating composition may comprise the second binder in an amount of from 0.01, 0.1, 0.5, 1, 1.5 or 2 to 20 dry wt%. The coating composition may comprise the second binder in an amount of from 0.01, 0.1, 0.5, 1, 1.5 or 2 to 15 dry wt%. The coating composition may comprise the second binder in an amount of from 0.01, 0.1, 0.5, 1, 1.5 or 2 to 10 dry wt%. The coating composition may comprise the second binder in an amount of from 0.01, 0.1, 0.5, 1, 1.5 or 2 to 8 dry wt%. The coating composition may comprise the second binder in an amount of from 0.01, 0.1, 0.5, 1, 1.5 or 2 to 5 dry wt%.

The coating composition may comprise the second binder in an amount of from 0.01 to 60 dry wt%. The coating composition may comprise the second binder in an amount of from 0.5 to 55 dry wt%. The coating composition may comprise the second binder in an amount of from 1 to 50 dry wt%. The coating composition may comprise the second binder in an amount of from 1.5 to 45 dry wt%. The coating composition may comprise the second binder in an amount of from 2 to 40 dry wt%. The coating composition may comprise the second binder in an amount of from 1 to 10 dry wt. The coating composition may comprise the second binder in an amount of from 2 to 8 dry wt%.

The coating composition may comprise the second binder in an amount of from 20 to 45 dry wt%, such as from 25 to 40 dry wt%, such as from 28 to 37 dry wt%.

The weight ratio of the first binder to the second binder (based on the dry weight of the materials) may be at least 20:1, such as at least 15:1, such as at least 10:1, such as at least 5:1, such as at least 2.5:1. The weight ratio of the first binder to the second binder (based on the dry weight of the materials) may be up to 20:1, such as up to 1:15, such as up to 1:10, such as up to 1:5, such as up to 1:2.5. The weight ratio of the first binder to the second binder (based on the dry weight of the materials) may be from 20:1 to 1:20, such as from 15:1 to 1:15, such as from 10:1 to 1:10, such as from 5:1 to 1:5, such as from 2.5:1 to 1:2.5.

### Fire Resistant Extender

The coating composition comprises a fire resistant extender.

An extender may be added to a coating composition to specifically affect properties and/or characteristics of the coating composition and/or the coating being derived therefrom, for example stability, rheology, gloss, sheen, scrub resistance. A fire resistant extender may reduce the flammability or retard the spread of flame. A fire resistant extender may also be known as a flame retardant. A fire resistant extender may be decomposed by heat into non-flammable components which have the ability to slow the spread of a flame and may even retard or suppress the combustion reaction. For example, a flame resistant extender may suppress oxygen availability, build up layers of char at the surface, and/or inhibit the combustion reaction with the flame, or by other mechanisms.

Non-limiting examples of fire resistant extenders include aluminium hydroxide, magnesium hydroxide, boric acid, phosphoric acid, phosphonic acid esters, such as long-chain ammonium polyphosphate products, chlorinated paraffins, dibromoneopentyl glycol, tetrabromophthalic acid anhydride, brominated diphenyl, chlorine and bromine containing polyols, diphenyl oxides, antimony trioxide, cellulose, melamine derivates, zinc borate, chlorowax, alumina trihydrate, calcium carbonate, barium sulfate, magnesium silicate, calcium silicate, mica, aluminum silicate, talcum, kaolin, and the like.

The fire resistant extender may comprise an inorganic hydroxide. Suitable inorganic hydroxides include, but are not limited to: aluminium hydroxide, magnesium hydroxide, boric acid, and the like.

The fire resistant extender may comprise aluminium hydroxide.

As discussed herein, the fire resistance of a coating composition may be improved by adding a fire resistant extender. Coating compositions containing high amounts of binder and/or coating compositions containing two or more binders typically require higher amounts of fire resistant extender than coating compositions containing low amounts of binder and/or coating compositions containing one binder. However, the use of high amounts of extender, such as fire resistant extender, in a coating composition may negatively affect various properties and/or characteristics, such as drying time, gloss, long term stability, and/or lightening of pigmentation. The inventors have surprisingly and advantageously found that coating compositions containing at least two binders as defined by the claims can contain lower amounts of fire resistant extender than would typically be expected, whilst maintaining good fire resistance and good aesthetic properties.

The coating composition comprises the fire resistant extended in an amount of less than 30 dry wt%.

The coating composition may comprise the fire resistant extender in an amount of at least 0.1 dry wt%, such as at least 0.5 dry wt%, such as at least 1 dry wt%. such as at least 2 dry wt%, such as at least 3 dry wt%, such as at least 4 dry wt%, such as at least 5 dry wt%, such as at least 6 dry wt%, such as at least 7 dry wt%, such as at least 8 dry wt%, such as at least 9 dry wt%.

The coating composition may comprise the fire resistant extender in an amount of less than 30 dry wt%, such as up to 29 dry wt%, such as up to 28 dry wt%, such as up to 27 dry wt%, such as up to 26 dry wt%, such as up to 25 dry wt%, such as up to 24 dry wt%, such as up to 23 dry wt%, such as up to 22 dry wt%, such as up to 21 dry wt%.

The coating composition may comprise the fire retardant extender in an amount of from 0.1, 0.5, 1, 2, 3, 4, 5, 6, 7, 8 or 9 to 30 dry wt%. The coating composition may comprise the fire retardant extender in an amount of from 0.1, 0.5, 1, 2, 3, 4, 5, 6, 7, 8 or 9 to 29 dry wt%. The coating composition may comprise the fire retardant extender in an amount of from 0.1, 0.5, 1, 2, 3, 4, 5, 6, 7, 8 or 9 to 28 dry wt%. The coating composition may comprise the fire retardant extender in an amount of from 0.1, 0.5, 1, 2, 3, 4, 5, 6, 7, 8 or 9 to 27 dry wt%. The coating composition may comprise the fire retardant extender in an amount of from 0.1, 0.5, 1, 2, 3, 4, 5, 6, 7, 8 or 9 to 26 dry wt%. The coating composition may comprise the fire retardant extender in an amount of from 0.1, 0.5, 1, 2, 3, 4, 5, 6, 7, 8 or 9 to 25 dry wt%. The coating composition may comprise the fire retardant extender in an amount of from 0.1, 0.5, 1, 2, 3, 4, 5, 6, 7, 8 or 9 to 24 dry wt%. The coating composition may comprise the fire retardant extender in an amount of from 0.1, 0.5, 1, 2, 3, 4, 5, 6, 7, 8 or 9 to 23 dry wt%. The coating composition may comprise the fire retardant extender in an amount of from 0.1, 0.5, 1, 2, 3, 4, 5, 6, 7, 8 or 9 to 22 dry wt%. The coating composition may comprise the fire retardant extender in an amount of from 0.1, 0.5, 1, 2, 3, 4, 5, 6, 7, 8 or 9 to 21 dry wt%.

The coating composition may comprise the fire resistant extender in an amount of from 0.1 to 30 dry wt%. The coating composition may comprise the fire resistant extender in an amount of from 1 to 29 dry wt%. The coating composition may comprise the fire resistant extender in an amount of from 2 to 28 dry wt%. The coating composition may comprise the fire resistant extender in an amount of from 3 to 27 dry wt%. The coating composition may comprise the fire resistant extender in an amount of from 4 to 26 dry wt%. The coating composition may comprise the fire resistant extender in an amount of from 5 to 25 dry wt%. The coating composition may comprise the fire resistant extender in an amount of from 6 to 24 dry wt%. The coating composition may comprise the fire resistant extender in an amount of from 7 to 23 dry wt%. The coating composition may comprise the fire resistant extender in an amount of from 8 to 22 dry wt% The coating composition may comprise the fire resistant extender in an amount of 9 to 21 dry wt%.

The coating composition may comprise the fire resistant extender in an amount of at least 0.1 wt%, such as at least 1 wt%, such as at least 2 wt%, such as at least 3 wt%, such as at least 4 wt%.

The coating composition may comprise the fire resistant extender in an amount of less than 15 wt%, such as up to 14.9 wt%, such as up to 14 wt%, such as up to 13 wt%, such as up to 12 wt%, such as up to 11 wt%.

The coating composition may comprise the fire resistant extender in an amount of from 0.1 to 14.9 wt%, such as from 1 to 14 wt%, such as from 2 to 13 wt%, such as from 3 to 12 wt%, such as from 4 to 11 wt%.

For example, the fire resistant aqueous coating composition may comprise:
(a) a first binder comprising a polymer formed from monomers including vinyl chloride, ethylene and vinyl ester;
(b) a second binder;
(c) a fire resistant extender in an amount of less than 15 wt%;
(d) a liquid carrier comprising water;
wherein wt% is the amount of a component in a coating composition based on the weight of the component relative to the total weight of a coating composition.

### Pigment

The coating composition may comprise a pigment, also known as a colorant. The pigment may comprise one or more inorganic or organic, transparent or non-transparent pigments. Non-limiting examples of such pigments are titanium dioxide, iron oxides, mixed metal oxides, bismuth vanadate, chromium oxide green, ultramarine blue, carbon black, lampblack, monoazo and disazo pigments, anthraquinones, isoindolinones, isoindolines, quinophthalones, phthalocyanine blues and greens, dioxazines, quinacridones and diketo-pyrrolopyrroles; and extender pigments including ground and crystalline silica, micaceous iron oxide, zinc oxide, gypsum, feldspar, and the like.

The pigment may be provided essentially free of alkyl phenol ethoxylated (APEO) additives. Herein essentially free in relation to alkyl phenol ethoxylated (APEO) additives means less than 5 wt% of said additives based on the total weight of pigment. The pigment may comprise a solvent, such as polyglycol and/or water. The pigment may be provided as an aqueous dispersion. The pigment may comprise biocides, preservatives, antimicrobial agents, and the like.

The amount of pigment that is used to form the coating composition is understood to vary, depending on the particular composition application, and can be zero when a clear coating composition is desired.

The pigment may comprise a white pigment and/or a coloured pigment,

The pigment may comprise a white pigment. The pigment may comprise titanium dioxide.

The coating composition may comprise a white pigment, such as titanium oxide, in an amount of at least 0.1 dry wt%, such as at least 1 dry wt%, such as at least 2 dry wt%, such as at least 3 dry wt%, such as at least 4 dry wt%.

The coating composition may comprise a white pigment, such as titanium oxide, in an amount of up to 43 dry wt%, such as up to 41 dry wt%, such as up to 39 dry wt%, such as up to 37 dry wt%, such as up to 35 dry wt%.

The coating composition may comprise a white pigment, such as titanium oxide, in an amount of from 0.1, 1, 2, 3 or 4 to 43 wt%. The coating composition may comprise a white pigment, such as titanium oxide, in an amount of from 0.1, 1, 2, 3 or 4 to 41 wt%. The coating composition may comprise a white pigment, such as titanium oxide, in an amount of from 0.1, 1, 2, 3 or 4 to 39 wt%. The coating composition may comprise a white pigment, such as titanium oxide, in an amount of from 0.1, 1, 2, 3 or 4 to 37 wt%. The coating composition may comprise a white pigment, such as titanium oxide, in an amount of from 0.1, 1, 2, 3 or 4 to 35 wt%

The coating composition may comprise a white pigment, such as titanium oxide, in an amount of from 0.1 to 43 dry wt%. The coating composition may comprise a white pigment, such as titanium oxide, in an amount of from 1 to 41 dry wt%. The coating composition may comprise a white pigment, such as titanium oxide, in an amount of from 2 to 39 dry wt%. The coating composition may comprise a white pigment, such as titanium oxide, in an amount of from 3 to 37 dry wt%. The coating composition may comprise a white pigment, such as titanium oxide, in an amount of from 4 to 35 dry wt%.

The pigment may comprise a coloured pigment. The coloured pigment may comprise C.I. Pigment Orange 73, C.I. Pigment Yellow 74, C.I. Pigment Yellow 138, C.I. Pigment Red 101, C.I. Pigment Red 254, C.I. Pigment Red 122, C.I. Pigment Blue 15, C.I. Pigment Green 17, C.I. Pigment Green 7, and/or C.I. Pigment Black 7.

The coloured pigment may comprise a black pigment. The black pigment may comprise carbon black. The black pigment may comprise C.I. Pigment Green 17, chrome oxide green, chromium(lll) oxide, hematite, chromium green black, and the like. For example, the black pigment may comprise Colanyl^{®} Oxide Black IR 531.

For example, the coloured pigment may comprise an aqueous dispersion of C.I. Pigment Green 17 in polyglycol.

The coating composition may comprise a coloured pigment in an amount of at least 0.25 vol%, such as at least 0.5 vol%, such as at least 0.75 vol%, such as at least 1 vol%, such as at least 1.25 vol%, based on the total volume of the coating composition.

The coating composition may comprise a coloured pigment in an amount of up to 10 vol%, such as up to 9 vol%, such as up to 8 vol%, such as up to 7 vol%, such as up to 6 vol%, based on the total volume of the coating composition.

The coating composition may comprise a coloured pigment in an amount of from 0.25, 0.5, 0.75, 1, or 1.25 to 10 vol%, based on the total volume of the coating composition. The coating composition may comprise a coloured pigment in an amount of from 0.25, 0.5, 0.75, 1, or 1.25 to 9 vol%, based on the total volume of the coating composition. The coating composition may comprise a coloured pigment in an amount of from 0.25, 0.5, 0.75, 1, or 1.25 to 8 vol%, based on the total volume of the coating composition. The coating composition may comprise a coloured pigment in an amount of from 0.25, 0.5, 0.75, 1, or 1.25 to 7 vol%, based on the total volume of the coating composition. The coating composition may comprise a coloured pigment in an amount of from 0.25, 0.5, 0.75, 1, or 1.25 to 6 vol%, based on the total volume of the coating composition.

The coating composition may comprise a coloured pigment in an amount of from 0.25 to 10 vol%, based on the total volume of the coating composition. The coating composition may comprise a coloured pigment in an amount of from 0.50 to 9 vol%, based on the total volume of the coating composition. The coating composition may comprise a coloured pigment in an amount of from 0.75 to 8 vol%, based on the total volume of the coating composition. The coating composition may comprise a coloured pigment in an amount of from 1.00 to 7 vol%, based on the total volume of the coating composition. The coating composition may comprise a coloured pigment in an amount of from 1.25 to 6 vol%, based on the total volume of the coating composition.

### Further components

The coating composition may include one or more further components known in the coatings industry.

The coating composition may include at least one additive. Suitable additives include, but are not limited to the following: catalysts, other pigments and pigment pastes, fillers, stabilizers, thixotropic agents, anti-sagging agents, anti-oxidants, anti-gelling agents, bactericides, fungicides, algaecides, antisettling agents, antifoaming agents, slip agents, flow and levelling agents, rheological modifiers, photoinitiators, UV-absorbers, synergists, HALS-radical scavengers, corrosion inhibitors, matting agents, waxes, mineral oils, flame retardants, anti-static agents, loss of dry inhibitors, optical brighteners, adhesion promoters, diluents, elastomers, plasticizers, air release agents, desiccants, anti-crater additives, reinforcing agents, dispersing aids, substrate wetting agents, odorants, corrosion-inhibitive pigments, additional hardeners and additional curable compounds, surface active agents, such as any of the well-known anionic, cationic or non-ionic surfactants or dispersing agents, depending on the application. Examples of suitable additives that may be added to the coating composition may be found in Additives Guide, Paint & Coatings Magazine, May 2006, hereby incorporated by reference.

The at least one additive may be selected from the group consisting of matting agents, waxes, rheology modifiers, thickeners, defoamers, alcohols, emulsifiers, biocides, anti-corrosion agents, wetting agents, coalescing agent, extenders, and solvents.

The coating composition may comprise additives in an amount of at least 0.1 dry wt%, such as at least 1 dry wt%, such as at least 2 dry wt%, such as at least 3 dry wt%, such as at least 4 dry wt%.

The coating composition may comprise additives in an amount of up to 15 dry wt%, such as up to 14 dry wt%, such as up to 13 dry wt%, such as up to 12 dry wt%, such as up to 11 dry wt%.

The coating composition may comprise additives in an amount of from 0.1 to 15 dry wt%, such as from 1 to 14 dry wt%, such as from 2 to 13 dry wt%, such as from 3 to 12 dry wt%, such as from 4 to 11 dry wt%.

The coating composition may comprise additives in an amount of at least 0.1 wt%, such as at least 1 wt%, such as at least 2 wt%, such as at least 3 wt%, such as at least 4 wt%.

The coating composition may comprise additives in an amount of up to 15 wt%, such as up to 14 wt%, such as up to 13 wt%, such as up to 12 wt%, such as up to 11 wt%.

The coating composition may comprise additives in an amount of from 0.1 to 15 wt%, such as from 1 to 14 wt%, such as from 2 to 13 wt%, such as from 3 to 12 wt%, such as from 4 to 11 wt%.

The coating composition comprises a liquid carrier. The liquid carrier comprises water. The liquid carrier may comprise water and an organic solvent. The liquid carrier may comprise water and a single solvent or a mixture of solvents. The liquid carrier may comprise water and an organic solvent or water and a mixture of organic solvents.

The coating composition according to the present disclosure is an aqueous fire resistant coating composition. An aqueous coating composition according to the present disclosure represents a coating composition obtainable by dissolving and/or dispersing coating composition components according to the present invention in an aqueous medium. In other words, the components of the coating composition according to the present disclosure may be substantially water dispersible.

The aqueous coating composition may comprise any suitable amount of liquid carrier.

The coating composition may comprise a liquid carrier at an amount of at least 5 wt%, such as at least 10 wt%, such as at least 15 wt%, such as at least 20 wt%, such as at least 25 wt%, such as at least 30 wt%, such as at least 35 wt%, such as at least 40 wt%, such as at least 45 wt% or even at least 50 wt% relative to the total weight of the coating composition.

The coating composition may comprise a liquid carrier in an amount of at least 3 wt%, such as at least 6 wt%, such as at least 9 wt%, such as at least 12 wt%, such as at least 15 wt% relative to the total weight of the coating composition.

The coating composition may comprise a liquid carrier in an amount of up to 80 wt%, such as up to 75 wt%, such as up to 70 wt%, such as up to 65 wt%, such as up to 60 wt%.

The coating composition may comprise a liquid carrier in an amount of from 3 to 80 wt%, such as from 6 to 75 wt%, such as from 9 to 70 wt%, such as from 12 to 65 wt%, such as from 15 to 60 wt%.

Herein, "aqueous" means that at least 50 wt% of the liquid carrier present in the coating composition, relative to the total weight of the liquid carrier, is water.

The liquid carrier may comprise water in an amount of at least 50 wt%, such as at least 55 wt%, such as at least 60 wt%, such as at least 65 wt%, such as at least 70 wt%, such as at least 75 wt%, such as at least 80 wt%, such as at least 85%, such as at least 90 wt%, or even at least 95 wt% relative to the total weight of the liquid carrier.

The liquid carrier may comprise an organic solvent.

Suitable organic solvents include, but are not limited to the following: aliphatic hydrocarbons such as mineral spirits and high flash point naphtha; aromatic hydrocarbons such as benzene; toluene; xylene; solvent naphtha 100, 150, 200; those available from Exxon-Mobil Chemical Company under the SOLVESSO (RTM) trade name; alcohols such as ethanol; n-propanol; isopropanol; n-butanol; pentanol; amyl alcohol; 1-methoxy-2-propanol; and butoxy ethanol; ketones such as acetone; cyclohexanone; methylisobutyl ketone; methyl ethyl ketone; esters such as ethyl acetate; butyl acetate; n-hexyl acetate; RHODIASOLV (RTM) RPDE (a blend of succinic and adipic esters commercially available from Rhodia); glycols such as butyl glycol; propylene glycol; glycol ethers such as methoxypropanol; ethylene glycol monomethyl ether; ethylene glycol monobutyl ether; those available from Dow under the DOWANOL (RTM) trade name, such as DOWANOL PM, DOWANOL DPM and DOWANOL PPH, for example; and combinations thereof.

The liquid carrier may comprise a solvent in an amount of up to 50 wt%, such as up to 45 wt%, such as up to 40 wt%, such as up to 35 wt%, such as up to 30 wt%, such as up to 25 wt%, such as up to 20 wt%, such as up to 15%, such as up to 10 wt%, or even up to 5 wt% relative to the total weight of the liquid carrier.

The aqueous coating composition may have any suitable total solids content (wherein solids content is as defined herein).

The coating composition may have a total solids content of at least 10 %SC, such as at least 15 %SC, such as at least 20 %SC, such as at least 25 %SC, such as at least 30 %SC.

The coating composition may have a total solids content of up to 80 %SC, such as up to 75 %SC, such as up to 70 %SC, such as up to 65 %SC, such as up to 60 %SC.

The coating composition may have a total solids content of from 10, 15, 20, 25 or 30 to 80 %SC. The coating composition may have a total solids content of from 10, 15, 20, 25 or 30 to 75 %SC. The coating composition may have a total solids content of from 10, 15, 20, 25 or 30 to 70 %SC. The coating composition may have a total solids content of from 10, 15, 20, 25 or 30 to 65 %SC. The coating composition may have a total solids content of from 10, 15, 20, 25 or 30 to 60 %SC.

The coating composition may have a total solids content of from 10 to 80 %SC. The coating composition may have a total solids content of from 15 to 75 %SC. The coating composition may have a total solids content of from 20 to 70 %SC. The coating composition may have a total solids content of from 25 to 65 %SC. The coating composition may have a total solids content of from 30 to 60 %SC.

The fire resistant aqueous coating composition may be applied to a substrate and cured to form a cured coating (film). The coating composition may be cured by any suitable method. For example, the coating composition may be cured by heat curing or chemical curing. The coating compositions may be fully cured at ambient temperature conditions, for example in the range from 0 to 50°C, such as from 1 to 45°C, such as from 3 to 40°C, or even from 5 to 35°C. Curing of the coating compositions may proceed very rapidly at the aforementioned temperature ranges.

The coating composition may cure through an autoxidisable method. For example, the coating may cure through an autoxidisable method when the coating composition comprises an oxidatively drying binder, such as a binder comprising an alkyd material. For example, the second binder may comprise an alkyd material which enables the coating composition to cure through an autoxidisable method. Suitable autoxidisable alkyd materials are in general the reaction product of the esterification of polyhydric alcohols with polybasic acids (or their anhydrides) and unsaturated fatty acids (or glycerol esters thereof).

The fire resistant aqueous coating composition may comprise at least one drying agent. Drying agents are commonly divided into three main classes according to their catalytic activity: primary driers, coordination driers, and secondary driers.

When the coating composition is oxidatively drying or autoxidisable, the coating composition may suitably comprise one or more drying agent. Autoxidisable alkyd resins are long-established binder polymers for film-forming coating compositions acknowledged for their aesthetic properties, low surface tension (which enables the wetting of and adhesion on a wide variety of substrates and facilitates pigment wetting), applicability by various techniques, and cost-effectiveness. Autoxidisable alkyd resins comprise drying or semi-drying unsaturated fatty acids or oils, which are chemically grafted to the polyester backbone composed of polyols and polycarboxylic acids. When the coating composition is applied to a substrate, the drying process starts by solvent evaporation and the unsaturated fatty acid side chains of the binder undergo autoxidation and subsequently form cross-links between the polymer chains resulting in a solid and coherently dried film. The drying process of autoxidisable alkyd resins takes place in the presence of oxygen under ambient or forced drying conditions, whereby the presence of oxygen is essential. The time for such compositions to dry depends on the concentration and type of unsaturated oil or fatty acids used to prepare the resin. Autoxidation and crosslinking of the unsaturated oil/fatty acid side chains can proceed unaided, but the time for drying is generally found to be unacceptably long for many practical applications. The curing is significantly accelerated by the addition of a metal-based drying catalyst, commonly referred to as a "drier" or "siccative".

Primary drying agents typically include carboxylates of transition metals such as cerium (Ce), cobalt (Co), copper (Cu), iron (Fe), manganese (Mn), and vanadium (V), which have at least two accessible valence states. In the radical curing process, the decomposition of the fatty acid peroxides catalyzed by metal ions generate fatty acid oxide radicals and fatty acid peroxide radicals. In this process, the metal catalyst is recurrently converted from the lower to the higher oxidation state and back again.

Primary drying agents based on iron ligand complexes containing tetradentate, pentadentate or hexadentate nitrogen donor ligands have been developed as alternatives to cobalt based drying agents for air-drying alkyd resins. Those iron based primary drying agents have shown improved drying behaviour under ambient conditions, and higher initial whiteness and lower yellowing tendency compared to other technologies.

The fire resistant aqueous coating composition may comprise at least one primary drying agent. The primary drying agent may comprise at least one metal ligand complex wherein the metal is selected from the group consisting of cerium (Ce), cobalt (Co), copper (Cu), iron (Fe), manganese (Mn), and vanadium (V). The primary metal drying agent may comprise at least one nitrogen donor ligand. The nitrogen donor ligand may be selected from the group comprising tridentate, tetradentate, pentadentate and hexadentate nitrogen donor ligands.

The coating composition according to the present disclosure may comprise at least one secondary drying agent. Secondary driers are metal driers that exist in a single oxidation state and are not catalytically active by themselves. However, secondary driers may affect the rate-of-dry by interacting with the primary drying agent. Typical secondary driers may be selected from calcium (Ca), barium (Ba), zinc (Zn), potassium (K), zirconium (Zr), and/or lithium (Li) metal soaps. The secondary drying agent may comprise metal soaps wherein the metal is select from the group comprising or consisting of calcium (Ca), barium (Ba), zinc (Zn), potassium (K), zirconium (Zr), and/or lithium (Li).

The coating composition according to the present disclosure may be an architectural coating composition. Herein, an "architectural" coating composition means a coating composition suitable for use on surfaces of architectural structures such as buildings and furniture and/or fittings found in or nearby buildings. As such, the coating composition may be an architectural coating composition suitable for application to, for example, wood, window frames, door frames, architectural beams, skirting, architrave, doors, walls, ceilings, floors, or columns, and the like.

### Substrate

The coating composition may be applied to various substrates. Suitable substrates include, but are not limited to: wood; paper; dry wall; synthetic materials, such as plastics, including elastomeric substrates; glass; ceramic; plasterboard; gypsum-board; and the like; and combinations thereof.

The substrate may comprise burnable material, such as wood, paper, dry wall, synthetic materials, and the like, and combinations thereof.

Thus, there is also provided a substrate coated on at least a portion thereof with a coating, the coating being derived from a coating composition according to the present disclosure.

The substrate may be pre-treated before application of the coating composition. Pre-treatment of architectural substrates, such as those provided herein, is well known to the person skilled in the art and refers to the preparation of surfaces to modify various characteristics such as adhesion, durability, protection, resistance, aesthetics, and/or overall performance of the coating. Suitable pre-treatment methods are well known and include, for example, chemical etching, mechanical abrasion, and/or application of rust inhibitors. In general, pre-treatment of architectural substrates may include cleaning of the substrate to remove residues such as dirt and/or grease, and/or the application of chemicals to the surface.

The coating composition may be applied to the substrate, or a portion thereof, as a single layer or as part of a multi-layer system. The coating composition may be applied as a single layer. The coating composition may be applied to an uncoated substrate. For the avoidance of doubt an uncoated substrate extends to a surface that is cleaned prior to application and/or otherwise pre-treated on the proviso that a coating layer has not been applied thereto. The coating composition may be applied on top of another paint layer as part of a multi-layer system. For example, the coating composition may be applied on top of a primer. The coating composition may form an intermediate layer or a topcoat layer. The coating composition may be applied as the first coat, or primer layer, of a multi coat system. The second, third, fourth etc. coats may comprise any suitable paint such as those containing, for example, acrylic resin; epoxy resins; polyester resins; polyurethane resins; polysiloxane resins; hydrocarbon resins or combinations thereof.

The coating composition may be applied as a primer in a multi-layer system. Thus, there is also provided a substrate coated on at least a portion thereof with a coating system, the coating system comprising:
(i) a primer layer, the primer layer being derived from a fire resistant aqueous coating composition as defined herein; and
(ii) a topcoat layer disposed on at least a portion of the primer layer, the topcoat layer being derived from a topcoat coating composition.

A typical system may comprise one or more layers, typically one layer, of a primer, such as a primer derived from the fire resistant aqueous coating compositions as defined herein, and one or more, typically two or more, topcoat layers. When more than one topcoat layer is used, each topcoat layer may be derived from the same or from different coating compositions.

The coating compositions may be applied to a substrate once or multiple times.

Advantageously, when the fire resistant aqueous coating composition according to the present disclosure is used as one or more primer layer(s), and thereon is applied one or more topcoat layer(s), the substrate may exhibit a lower burnability. In other words, advantageously any topcoat composition may be selected depending on the desired application (e.g. interior, exterior) and desired characteristics/properties (e.g. durability, gloss) of the coated substrate and applied on top of one or more primer layer(s) according to the invention to achieve a lower burnability.

Herein, the recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

Singular encompasses plural and vice versa. For example, although reference is made herein to "a" polyester imide polymer, "a" crosslinker material, "an" imide containing moiety, "an" acid group, "an" alcohol group, and the like, one or more of each of these and any other components can be used. As used herein, the term "polymer" refers to oligomers and both homopolymers and copolymers, and the prefix "poly" refers to two or more.

Unless defined otherwise, all technical and scientific terms used herein have the same meaning as is commonly understood by one of skill in the art. All publications referenced herein are incorporated by reference thereto.

The terms "comprising", "comprises" and "comprised of" as used herein are synonymous with "including", "includes" or "containing", "contains", and are inclusive or open-ended and do not exclude additional, non-recited members, elements or method steps. Additionally, although the present disclosure has been described in terms of "comprising", the coating compositions detailed herein may also be described as "consisting essentially of" or "consisting of".

As used herein, the term "and/or," when used in a list of two or more items, means that any one of the listed items can be employed by itself or any combination of two or more of the listed items can be employed. For example, if a list is described as comprising group A, B, and/or C, the list can comprise A alone; B alone; C alone; A and B in combination; A and C in combination, B and C in combination; or A, B, and C in combination.

All of the features contained herein may be combined with any of the above aspects in any combination.

For a better understanding of the invention, and to show how embodiments of the same may be carried into effect, reference will now be made, by way of example, to the following examples.

### EXAMPLES

### Methods

### Method 1: Burnability Test

The following method was used to calculate the burnability of coating composition reported herein. Wood substrates (sawn spruce, 10 × 10 × 2.2 cm) were coated with an example coating composition. Three layers of the example coating composition were applied as follows:
Layer 1, contacting the substrate, 5 m²/litre, 200 microns wet film layer thickness Layer 2, intermediate layer, 8 m²/litre, 125 microns wet film layer thickness Layer 3, topcoat layer, 8 m²/litre, 125 microns wet film layer thickness

The coated substrates were then allowed to rest at 50% humidity and 23 °C until the weight of the samples has stabilised (typically 14 days).

The coated substrates were then subjected to a constant heat flux of 50 kW/m² for 180 seconds and energy measurements were taken every 5 seconds. Samples typically ignited after 20 to 40 seconds, releasing significant energy. Energy measurements increase to a maxima and then decrease until the coated substrates are completely burnt.

Burnability (B) is calculated according to equation (1): $Burnabilitiy \left(B\right) = \frac{{E}_{max} \left(kW⋅{area}^{- 1}\right)}{\frac{{T}_{{E}_{max}}}{5} \left(s\right)}$ wherein:
B is burnability ((kW/area)/s)
Eₘₐₓ (kW/area) is the maximum energy released during the measurement
T_{Emax} (s) is the time taken to reach Eₘₐₓ, divided by 5 (to account for resolution of measurement)

A coated substrate exhibiting lower B indicates a coating composition with higher fire resistance.

### Method 2: Time to Ignition (TTI)

The time to ignition (TTI) value for each coated substrate is extract from the results of the burnability experiment outlined above. TTI is the time in seconds taken for the sample to ignite, wherein time = 0 seconds is when the coating substrate is subjected to a constant heat flux. That is, the TTI is the time at which the measurement of energy increases.

A coated substrate exhibiting longer TTI indicates a coating composition with higher fire resistance.

### Method 3: Fire Growth Rate Index (FIGRA)

The reaction to fire performance of substrates coated with the coating composition was tested according to EN 13823 and the FIGRA, an indication of fire growth rate based on heat release during the exposure period, recorded in W/s.

A coated substrate exhibiting lower FIGRA value indicates a coating composition with higher fire resistance.

### Materials

The following materials were used:

| | |
|---|---|
| Acrylic binder blend: | a blend of a non-plasticized acrylic aqueous copolymer dispersion (48%) with an acrylic dispersion (50% solids content) |
| Modified PU binder: | an aliphatic polyurethane-alkyd aqueous dispersion (38 to 40% solids) |
| Terpolymer: | an aqueous dispersion of a polymer formed from monomers including vinyl chloride, ethylene and vinyl ester (58% solids) |
| Black pigment A: | Avatint CH available from Tikkurila |
| Black pigment B: | Colanyl^{®} Oxide Black IR 531 (84% solids) |
| Commercial Paint A: | Bestå Grundfärg Trä, Alcro |
| Commercial Paint B: | Bestå Diamant, Alcro |

### Coating Compositions

Coating compositions according to the present invention, Examples (Ex.) 1 and 2 were prepared according to the formulations in Table 1. Coating compositions not according to the present invention, Comparative Example (C. Ex.) 1 to 4, were prepared according to the formulations in Table 1.

**Table 1 - Example coating compositions by weight percentage (wt%)**

| | **C. Ex. 1** | **C. Ex. 2** | **C. Ex. 3** | **C. Ex. 4** | **Ex. 1** | **Ex. 2** |
|---|---|---|---|---|---|---|
| **BASE PAINT** | | | | | | |
| Acrylic binder blend | 56.66 | 56.66 | 56.66 | 28.33 | 28.33 | 28.33 |
| Modified PU binder | 7.81 | 7.81 | 7.81 | 7.81 | 7.81 | 7.81 |
| Terpolymer | - | - | - | 28.33 | 28.33 | 28.33 |
| Water | 18.60 | 18.60 | 18.60 | 18.60 | 18.60 | 18.60 |
| Aluminium hydroxide | - | - | 8.29 | - | 8.29 | 8.29 |
| Non-aluminium based extenders (talc, silicate) | 8.29 | 8.29 | - | 8.29 | - | - |
| Thickeners | 2.62 | 2.62 | 2.62 | 2.62 | 2.62 | 2.62 |
| Preservatives + Biocides | 1.66 | 1.66 | 1.66 | 1.66 | 1.66 | 1.66 |
| Other additives | 4.36 | 4.36 | 4.36 | 4.36 | 4.36 | 4.36 |
| **Total (wt%)** | **100.00** | **100.00** | **100.00** | **100.00** | **100.00** | **100.00** |

| **EXAMPLE FORMULATIONS** | | | | | | |
|---|---|---|---|---|---|---|
| Base Paint (mL) | 100.00 | 96.25 | 96.25 | 96.25 | 100.00 | 96.25 |
| Black Pigment A (mL) | - | 3.75 | 3.75 | 3.75 | - | 3.75 |

| **CHARACTERISTICS** | | | | | | |
|---|---|---|---|---|---|---|
| Burnability (B)^{(a)} ((kW/area)/s) | 24.8 | 32.8 | 29.9 | 24.6 | 12.8 | 17.9 |
| Time to ignition (TT1)^{(b)} (seconds) | 26.7 | 19.3 | 20.0 | 15.3 | 25.0 | 34.0 |

| | | | | | | |
|---|---|---|---|---|---|---|
| ^{(a)} The burnability of an uncoated substrate was 14.8 ^{(b)} The time to ignition of an uncoated substrate was 23.2 seconds | | | | | | |

**Table 2 - Example coating compositions by percentage solids content (%SC)**

| | **C. Ex. 1** | **C. Ex. 2** | **C. Ex. 3** | **C. Ex. 4** | **Ex. 1** | **Ex. 2** |
|---|---|---|---|---|---|---|
| **BASE PAINT** | | | | | | |
| Acrylic binder blend | 27.91 | 27.91 | 27.91 | 13.95 | 13.95 | 13.95 |
| Modified PU binder | 3.02 | 3.02 | 3.02 | 3.02 | 3.02 | 3.02 |
| Terpolymer | - | - | - | 16.46 | 16.46 | 16.46 |
| Water | - | - | - | - | - | - |
| Aluminium hydroxide | - | - | 8.29 | - | 8.29 | 8.29 |
| Non-aluminium based extenders (talc, silicate) | 8.29 | 8.29 | - | 8.29 | - | - |
| Thickeners | 0.69 | 0.69 | 0.69 | 0.69 | 0.69 | 0.69 |
| Preservatives + Biocides | 0.37 | 0.37 | 0.37 | 0.37 | 0.37 | 0.37 |
| Other additives | 3.81 | 3.81 | 3.81 | 3.81 | 3.81 | 3.81 |
| **Total (%SC)** | **44.09** | **44.09** | **44.09** | **46.60** | **46.60** | **46.60** |

**Table 3 - Example coating compositions by dry weight percentage (dry wt%)**

| | **C. Ex. 1** | **C. Ex. 2** | **C. Ex. 3** | **C. Ex. 4** | **Ex. 1** | **Ex. 2** |
|---|---|---|---|---|---|---|
| **BASE PAINT** | | | | | | |
| Acrylic binder blend | 63.30 | 63.30 | 63.30 | 29.94 | 29.94 | 29.94 |
| Modified PU binder | 6.85 | 6.85 | 6.85 | 6.48 | 6.48 | 6.48 |
| Terpolymer | - | - | - | 35.33 | 35.33 | 35.33 |
| Water | - | - | - | - | - | - |
| Aluminium hydroxide | - | - | 18.80 | - | 17.79 | 17.79 |
| Non-aluminium based extenders (talc, silicate) | 18.80 | 18.80 | - | 17.79 | **-** | - |
| Thickeners | 1.56 | 1.56 | 1.56 | 1.48 | 1.48 | 1.48 |
| Preservatives + Biocides | 0.84 | 0.84 | 0.84 | 0.79 | 0.79 | 0.79 |
| Other additives | 8.64 | 8.64 | 8.64 | 8.18 | 8.18 | 8.18 |
| **Total (dry wt%)** | **100.00** | **100.00** | **100.00** | **100.00** | **100.00** | **100.00** |

Coating compositions according to the present invention, Examples 3 and 4, were prepared according to the formulations in Table 4. Coating compositions not according to the present invention, Comparative Example 5 to 8, were prepared according to the formulations in Table 4.

**Table 4 - Example coating compositions by weight percentage (wt%)**

| | **C. Ex. 5** | **C. Ex. 6** | **C. Ex. 7** | **C. Ex. 8** | **Ex. 3** | **Ex. 4** |
|---|---|---|---|---|---|---|
| **BASE PAINT** | | | | | | |
| Acrylic binder | 46.11 | 46.11 | 46.11 | 23.05 | 23.05 | 23.05 |
| Modified PU binder | 9.67 | 9.67 | 9.67 | 9.67 | 9.67 | 9.67 |
| Terpolymer | - | - | - | 23.05 | 23.05 | 23.05 |
| Water | 15.49 | 15.49 | 15.49 | 15.49 | 15.49 | 15.49 |
| Aluminium hydroxide | - | - | 5.71 | - | 5.71 | 5.71 |
| Non-aluminium based extenders (talc, silicate) | 5.71 | 5.71 | - | 5.71 | - | - |
| Titanium dioxide | 15.79 | 15.79 | 15.79 | 15.79 | 15.79 | 15.79 |
| Thickeners | 2.89 | 2.89 | 2.89 | 2.89 | 2.89 | 2.89 |
| Preservatives + Biocides | 1.68 | 1.68 | 1.68 | 1.68 | 1.68 | 1.68 |
| Other additives | 2.66 | 2.66 | 2.66 | 2.66 | 2.66 | 2.66 |
| **Total (wt%)** | **100.00** | **100.00** | **100.00** | **100.00** | **100.00** | **100.00** |

| **EXAMPLE FORMULATIONS** | | | | | | |
|---|---|---|---|---|---|---|
| Base Paint (mL) | 100.00 | 97.77 | 97.77 | 97.77 | 100.00 | 97.77 |
| Black Pigment A (mL) | - | 2.23 | 2.23 | 2.23 | - | 2.23 |

| **CHARACTERISTICS** | | | | | | |
|---|---|---|---|---|---|---|
| Burnability (B)^{(a)} ((kW/area)/s) | 17.9 | 25.0 | 19.5 | 17.1 | 10.3 | 13.4 |
| Time to ignition (TT1)^{(b)} (seconds) | 31.3 | 18.0 | 19.5 | 24.3 | 30.3 | 45.3 |

| | | | | | | |
|---|---|---|---|---|---|---|
| ^{(a)} The burnability of an uncoated substrate was 14.8 ^{(b)} The time to ignition of an uncoated substrate was 23.2 seconds | | | | | | |

**Table 5 - Example coating compositions by percentage solids content (%SC)**

| | **C. Ex. 5** | **C. Ex. 6** | **C. Ex. 7** | **C. Ex. 8** | **Ex. 3** | **Ex. 4** |
|---|---|---|---|---|---|---|
| **BASE PAINT** | | | | | | |
| Acrylic binder | 22.10 | 22.10 | 22.10 | 11.05 | 11.05 | 11.05 |
| Modified PU binder | 3.74 | 3.74 | 3.74 | 3.74 | 3.74 | 3.74 |
| Terpolymer | - | - | - | 13.39 | 13.39 | 13.39 |
| Water | - | - | - | - | - | - |
| Aluminium hydroxide | - | - | 5.71 | - | 5.71 | 5.71 |
| Non-aluminium based extenders (talc, silicate) | 5.71 | 5.71 | - | 5.71 | - | - |
| Titanium dioxide | 15.79 | 15.79 | 15.79 | 15.79 | 15.79 | 15.79 |
| Thickeners | 0.62 | 0.62 | 0.62 | 0.62 | 0.62 | 0.62 |
| Preservatives + Biocides | 0.38 | 0.38 | 0.38 | 0.38 | 0.38 | 0.38 |
| Other additives | 2.16 | 2.16 | 2.16 | 2.16 | 2.16 | 2.16 |
| **Total (%SC)** | **50.50** | **50.50** | **50.50** | **52.84** | **52.84** | **52.84** |

**Table 6 - Example coating compositions by dry weight percentage (dry wt%)**

| | **C. Ex. 5** | **C. Ex. 6** | **C. Ex. 7** | **C. Ex. 8** | **Ex. 3** | **Ex. 4** |
|---|---|---|---|---|---|---|
| **BASE PAINT** | | | | | | |
| Acrylic binder | 43.76 | 43.76 | 43.76 | 20.91 | 20.91 | 20.91 |
| Modified PU binder | 7.41 | 7.41 | 7.41 | 7.08 | 7.08 | 7.08 |
| Terpolymer | - | - | - | 25.34 | 25.34 | 25.34 |
| Water | - | - | - | - | - | - |
| Aluminium hydroxide | - | - | 11.31 | - | 10.81 | 10.81 |
| Non-aluminium based extenders (talc, silicate) | 11.31 | 11.31 | - | 10.81 | - | - |
| Titanium dioxide | 31.27 | 31.27 | 31.27 | 29.88 | 29.88 | 29.88 |
| Thickeners | 1.23 | 1.23 | 1.23 | 1.17 | 1.17 | 1.17 |
| Preservatives + Biocides | 0.75 | 0.75 | 0.75 | 0.72 | 0.72 | 0.72 |
| Other additives | 4.28 | 4.28 | 4.28 | 4.09 | 4.09 | 4.09 |
| **Total (dry wt%)** | **100.00** | **100.00** | **100.00** | **100.00** | **100.00** | **100.00** |

The results of methods 1 and 2 show that coating compositions according to the invention display lower burnability values compared to those of the comparative examples. The results further show that coating compositions according to the invention display similar or longer time to ignition values compared to those of the comparative examples. In other words, coating compositions according to the invention exhibit superior fire resistance compared to compositions not according to the invention.

The results further show that the fire resistance of the coating composition according to the invention is superior in tinted and untinted formulations.

Base Paint A was prepared according to the formulation in Table 7.

**Table 7 - Base Paint A**

| | **wt%** | **%SC** | **dry wt%** |
|---|---|---|---|
| Modified PU binder | 10.00 | 3.87 | 7.22 |
| Terpolymer | 50.00 | 29.05 | 54.18 |
| Water | 16.80 | - | - |
| Aluminium hydroxide | 15.00 | 15.00 | 27.97 |
| Titanium dioxide | 1.00 | 1.00 | 1.86 |
| Thickeners | 2.42 | 0.51 | 0.95 |
| Preservatives + Biocides | 1.53 | 1.54 | 2.87 |
| Other additives | 3.25 | 2.65 | 4.94 |
| **Total (wt%)** | **100.00** | **53.62** | **100.00** |

Examples 5 and 6 according to the present invention were prepared according to the formulations in Table 8. Pigmented commercial paint A and B, not according to the invention, were prepared according to Table 8.

**Table 8 - Example coating compositions by volume percentage (vol%)**

| | **Pigmented Commercial Paint A (vol%)** | **Pigmented Commercial Paint B (vol%)** | **Ex. 5 (vol%)** | **Ex. 6 (vol%)** |
|---|---|---|---|---|
| Commercial Paint A | 96.25 | - | - | - |
| Commercial Paint B | - | 96.25 | - | - |
| Base Paint A | - | - | 98.09 | 92.78 |
| Black Pigment A | 3.75 | 3.75 | 1.91 | - |
| Black Pigment B | - | - | - | 7.22 |
| **Total (wt%)** | **100.00** | **100.00** | **100.00** | **100.00** |

Coated substrates Examples 8 and 9 according to the invention and coated substrate Comparative Example 10 not according to the invention were prepared and tested according to method 3 (FIGRA test, see above).

**Table 9 - Example coated substrates**

| | **C. Ex. 10** | **Ex. 8** | **Ex. 9** |
|---|---|---|---|
| **COATINGS** | | | |
| Layer 1 | Pigmented Commercial Paint A | Ex. 5 | Ex. 6 |
| Layer 2 | Pigmented Commercial Paint B | Ex. 5 | Ex. 6 |
| Layer 3 | Pigmented Commercial Paint B | Pigmented Commercial Paint B | Pigmented Commercial Paint B |

| **CHARACTERISTICS** | | | |
|---|---|---|---|
| FIGRA value (W/s) | 1372 | 869 | 761 |

The results show that coating compositions according to the invention display lower FIGRA values compared to a coating composition not according to the invention. That is, the results show that coating compositions according to the invention display higher fire resistance than a coating composition not according to the invention.

In view of the foregoing description and examples, the present invention thus relates *inter alia* to the subject matter of the following aspects, though not limited thereto:
Aspect 1. A coating composition comprising: (a) a first binder comprising a polymer formed from monomers including vinyl chloride, ethylene and vinyl ester; (b) a second binder; (c) a fire resistant extender in an amount of less than 30 dry wt%; (d) a liquid carrier comprising water; wherein dry wt% is the amount of a component based on the dry weight of the component relative to the total dry weight of the coating composition.
Aspect 2. A coating composition according to aspect 1 wherein the fire resistant extender comprises an inorganic hydroxide.
Aspect 3. A coating composition according to any preceding aspect wherein the fire resistant extender comprises aluminium hydroxide.
Aspect 4. A coating composition according to any preceding aspect comprising the fire resistant extender in an amount of up to 29 dry wt%.
Aspect 5. A coating composition according to any preceding aspect comprising the fire resistant extender in an amount of up to 28 dry wt%.
Aspect 6. A coating composition according to any preceding aspect comprising the fire resistant extender in an amount of up to 27 dry wt%.
Aspect 7. A coating composition according to any preceding aspect comprising the fire resistant extender in an amount of up to 26 dry wt%.
Aspect 8. A coating composition according to any preceding aspect comprising the fire resistant extender in an amount of up to 25 dry wt%.
Aspect 9. A coating composition according to any preceding aspect comprising the fire resistant extender in an amount of up to 24 dry wt%.
Aspect 10. A coating composition according to any preceding aspect comprising the fire resistant extender in an amount of up to 23 dry wt%.
Aspect 11. A coating composition according to any preceding aspect comprising the fire resistant extender in an amount of up to 22 dry wt%.
Aspect 12. A coating composition according to any preceding aspect comprising the fire resistant extender in an amount of up to 21 dry wt%.
Aspect 13. A coating composition according to any preceding aspect comprising the fire resistant extender in an amount of up to 20 dry wt%.
Aspect 14. A coating composition according to any preceding aspect comprising the fire resistant extender in an amount of at least 1 dry wt%.
Aspect 15. A coating composition according to any preceding aspect comprising the fire resistant extender in an amount of at least 2 dry wt%.
Aspect 16. A coating composition according to any preceding aspect comprising the fire resistant extender in an amount of at least 3 dry wt%.
Aspect 17. A coating composition according to any preceding aspect comprising the fire resistant extender in an amount of at least 4 dry wt%.
Aspect 18. A coating composition according to any preceding aspect comprising the fire resistant extender in an amount of at least 5 dry wt%.
Aspect 19. A coating composition according to any preceding aspect comprising the fire resistant extender in an amount of at least 6 dry wt%.
Aspect 20. A coating composition according to any preceding aspect comprising the fire resistant extender in an amount of at least 7 dry wt%.
Aspect 21. A coating composition according to any preceding aspect comprising the fire resistant extender in an amount of at least 8 dry wt%.
Aspect 22. A coating composition according to any preceding aspect comprising the fire resistant extender in an amount of at least 9 dry wt%.
Aspect 23. A coating composition according to any preceding aspect comprising the fire resistant extender in an amount of at least 10 dry wt%.
Aspect 24. A coating composition according to any preceding aspect comprising the first binder in an amount of up to 80 dry wt%.
Aspect 25. A coating composition according to any preceding aspect comprising the first binder in an amount of up to 70 dry wt%.
Aspect 26. A coating composition according to any preceding aspect comprising the first binder in an amount of up to 60 dry wt%.
Aspect 27. A coating composition according to any preceding aspect comprising the first binder in an amount of up to 50 dry wt%.
Aspect 28. A coating composition according to any preceding aspect comprising the first binder in an amount of up to 40 dry wt%.
Aspect 29. A coating composition according to any preceding aspect comprising the first binder in an amount of at least 1 dry wt%.
Aspect 30. A coating composition according to any preceding aspect comprising the first binder in an amount of at least 10 dry wt%.
Aspect 31. A coating composition according to any preceding aspect comprising the first binder in an amount of at least 20 dry wt%.
Aspect 32. A coating composition according to any preceding aspect comprising the first binder in an amount of at least 30 dry wt%.
Aspect 33. A coating composition according to any preceding aspect comprising the first binder in an amount of at least 40 dry wt%.
Aspect 34. A coating composition according to any preceding aspect wherein the second binder comprises a modified polyurethane material, such as a polyurethane-alkyd material, and/or an acrylic material.
Aspect 35. A coating composition according to any preceding aspect wherein the second binder comprises a modified polyurethane material.
Aspect 36. A coating composition according to any preceding aspect wherein the second binder comprises a polyurethane-alkyd material.
Aspect 37. A coating composition according to any preceding aspect wherein the second binder comprises an acrylic material.
Aspect 38. A coating composition according to any preceding aspect comprising the second binder in an amount of up to 60 dry wt%.
Aspect 39. A coating composition according to any preceding aspect comprising the second binder in an amount of up to 55 dry wt%.
Aspect 40. A coating composition according to any preceding aspect comprising the second binder in an amount of up to 50 dry wt%.
Aspect 41. A coating composition according to any preceding aspect comprising the second binder in an amount of up to 45 dry wt%.
Aspect 42. A coating composition according to any preceding aspect comprising the second binder in an amount of up to 40 dry wt%.
Aspect 43. A coating composition according to any preceding aspect comprising the second binder in an amount of at least 0.1 dry wt%.
Aspect 44. A coating composition according to any preceding aspect comprising the second binder in an amount of at least 0.5 dry wt%.
Aspect 45. A coating composition according to any preceding aspect comprising the second binder in an amount of at least 1 dry wt%.
Aspect 46. A coating composition according to any preceding aspect comprising the second binder in an amount of at least 1.5 dry wt%.
Aspect 47. A coating composition according to any preceding aspect comprising the second binder in an amount of at least 2 dry wt%.
Aspect 48. A coating composition according to any preceding aspect having a total solids content of up to 80 dry wt%.
Aspect 49. A coating composition according to any preceding aspect having a total solids content of up to 75 dry wt%.
Aspect 50. A coating composition according to any preceding aspect having a total solids content of up to 70 dry wt%.
Aspect 51. A coating composition according to any preceding aspect having a total solids content of up to 65 dry wt%.
Aspect 52. A coating composition according to any preceding aspect having a total solids content of up to 60 dry wt%.
Aspect 53. A coating composition according to any preceding aspect having a total solids content of at least 10 dry wt%.
Aspect 54. A coating composition according to any preceding aspect having a total solids content of at least 15 dry wt%.
Aspect 55. A coating composition according to any preceding aspect having a total solids content of at least 20 dry wt%.
Aspect 56. A coating composition according to any preceding aspect having a total solids content of at least 25 dry wt%.
Aspect 57. A coating composition according to any preceding aspect having a total solids content of at least 30 dry wt%.
Aspect 58. A coating composition according to any preceding aspect further comprising a white pigment.
Aspect 59. A coating composition according to aspect 58 wherein the white pigment is titanium dioxide.
Aspect 60. A coating composition according to aspect 58 or 59 comprising the white pigment in an amount of up to 45 dry wt%.
Aspect 61. A coating composition according to aspect 58 or 59 comprising the white pigment in an amount of up to 43 dry wt%.
Aspect 62. A coating composition according to aspect 58 or 59 comprising the white pigment in an amount of up to 41 dry wt%.
Aspect 63. A coating composition according to aspect 58 or 59 comprising the white pigment in an amount of up to 39 dry wt%.
Aspect 64. A coating composition according to aspect 58 or 59 comprising the white pigment in an amount of up to 37 dry wt%.
Aspect 65. A coating composition according to aspect 58 or 59 comprising the white pigment in an amount of up to 35 dry wt%.
Aspect 66. A coating composition according to any preceding aspect further comprising a coloured pigment.
Aspect 67. A coating composition according to aspect 66 wherein the coloured pigment comprises C.I. Pigment Orange 73, C.I. Pigment Yellow 74, C.I. Pigment Yellow 138, C.I. Pigment Red 101, C.I. Pigment Red 254, C.I. Pigment Red 122, C.I. Pigment Blue 15, C.I. Pigment Green 17, C.I. Pigment Green 7, C.I. Pigment Black 7, carbon black, chrome oxide green, chromium(lll) oxide, hematite, and/or chromium green black.
Aspect 68. A coating composition according to aspect 66 wherein the coloured pigment comprises carbon black, chrome oxide green, chromium(lll) oxide, hematite, and/or chromium green black.
Aspect 69. A coating composition according to any one of aspects 66 to 68 comprising the coloured pigment in an amount of up to 10 vol%.
Aspect 70. A coating composition according to any one of aspects 66 to 68 comprising the coloured pigment in an amount of up to 9 vol%.
Aspect 71. A coating composition according to any one of aspects 66 to 68 comprising the coloured pigment in an amount of up to 8 vol%.
Aspect 72. A coating composition according to any one of aspects 66 to 68 comprising the coloured pigment in an amount of up to 7 vol%.
Aspect 73. A coating composition according to any one of aspects 66 to 68 comprising the coloured pigment in an amount of up to 6 vol%.
Aspect 74. A coating composition according to any one of aspects 66 to 68 comprising the coloured pigment in an amount of up to 5 vol%.
Aspect 75. A coating composition according to any preceding aspect comprising the liquid carrier in an amount of up to 80 wt%.
Aspect 76. A coating composition according to any preceding aspect comprising the liquid carrier in an amount of up to 75 wt%.
Aspect 77. A coating composition according to any preceding aspect comprising the liquid carrier in an amount of up to 70 wt%.
Aspect 78. A coating composition according to any preceding aspect comprising the liquid carrier in an amount of up to 65 wt%.
Aspect 79. A coating composition according to any preceding aspect comprising the liquid carrier in an amount of up to 60 wt%.
Aspect 80. A coating composition according to any preceding aspect comprising the liquid carrier in an amount of up to 55 wt%.
Aspect 81. A coating composition according to any preceding aspect comprising the liquid carrier in an amount of at least 3 wt%.
Aspect 82. A coating composition according to any preceding aspect comprising the liquid carrier in an amount of at least 6 wt%.
Aspect 83. A coating composition according to any preceding aspect comprising the liquid carrier in an amount of at least 9 wt%.
Aspect 84. A coating composition according to any preceding aspect comprising the liquid carrier in an amount of at least 12 wt%.
Aspect 85. A coating composition according to any preceding aspect comprising the liquid carrier in an amount of at least 15 wt%.
Aspect 86. A coating composition according to any preceding aspect wherein the liquid carrier comprises water in an amount of at least 50 wt%.
Aspect 87. A coating composition according to any preceding aspect wherein the liquid carrier comprises water in an amount of at least 55 wt%.
Aspect 88. A coating composition according to any preceding aspect wherein the liquid carrier comprises water in an amount of at least 60 wt%.
Aspect 89. A coating composition according to any preceding aspect wherein the liquid carrier comprises water in an amount of at least 65 wt%.
Aspect 90. A coating composition according to any preceding aspect wherein the liquid carrier comprises water in an amount of at least 70 wt%.
Aspect 91. A coating composition according to any preceding aspect wherein the liquid carrier comprises water in an amount of at least 75 wt%.
Aspect 92. A coating composition according to any preceding aspect wherein the liquid carrier comprises water in an amount of at least 85 wt%.
Aspect 93. A coating composition according to any preceding aspect wherein the liquid carrier comprises water in an amount of at least 90 wt%.
Aspect 94. A coating composition according to any preceding aspect wherein the liquid carrier comprises water in an amount of at least 95 wt%.
Aspect 95. A coating composition according to any preceding aspect wherein the coating composition is an architectural coating composition.
Aspect 96. A substrate coated on at least a portion thereof with a coating, the coating being derived from a coating composition as defined in any one of the preceding aspects.
Aspect 97. A substrate coated on at least a portion thereof with a coating system, the coating system comprising: (i) at least one primer layer, the or each primer layer being derived from a fire resistant aqueous coating composition according to aspects 1 to 68; and (ii) at least one topcoat layer disposed on at least a portion of the primer layer, the or each topcoat layer being derived from a topcoat coating composition.
Aspect 98. A substrate according to aspect 96 or 97, wherein the substrate comprises burnable material.
Aspect 99. Use of a fire resistant aqueous coating composition according to any one of aspects 1 to 95 to reduce the burnability of a burnable substrate.

## Claims

1. A fire resistant aqueous coating composition comprising:
(a) a first binder comprising a polymer formed from monomers including vinyl chloride, ethylene and vinyl ester;
(b) a second binder;
(c) a fire resistant extender in an amount of less than 30 dry wt%;
(d) a liquid carrier comprising water;
wherein dry wt% is the amount of a component based on the dry weight of the component relative to the total dry weight of the coating composition.

2. A coating composition according to claim 1, wherein the fire resistant extender comprises an inorganic hydroxide.

3. A coating composition according to claim 1 or 2, wherein the fire resistant extender comprises aluminium hydroxide.

4. A coating composition according to any preceding claim, wherein the coating composition comprises the first binder in an amount of from 1 to 80 dry wt%.

5. A coating composition according to any preceding claim, wherein the second binder comprises a modified polyurethane material, such as a polyurethane-alkyd material, and/or an acrylic material.

6. A coating composition according to any preceding claim, wherein the coating composition comprises the second binder in an amount of from 0.01 to 60 dry wt%.

7. A coating composition according to any preceding claim, wherein the coating composition has a total solids content of from 10 to 80%.

8. A coating composition according to any preceding claim, wherein the coating composition comprises a white pigment and/or a coloured pigment.

9. A coating composition according to claim 8, wherein the coloured pigment comprises C.I. Pigment Orange 73, C.I. Pigment Yellow 74, C.I. Pigment Yellow 138, C.I. Pigment Red 101, C.I. Pigment Red 254, C.I. Pigment Red 122, C.I. Pigment Blue 15, C.I. Pigment Green 17, C.I. Pigment Green 7, C.I. Pigment Black 7, carbon black, chrome oxide green, chromium(lll) oxide, hematite, and/or chromium green black.

10. A coating composition according to any preceding claim, wherein the coating composition comprises the liquid carrier in an amount of from 3 to 80 wt%.

11. A coating composition according to any preceding claim, wherein the coating composition is an architectural coating composition.

12. A substrate coated on at least a portion thereof with a coating, the coating being derived from a coating composition as defined in any one of the preceding claims.

13. A substrate coated on at least a portion thereof with a coating system, the coating system comprising:
(i) at least one primer layer, the or each primer layer being derived from a fire resistant aqueous coating composition according to claims 1 to 11; and
(ii) at least one topcoat layer disposed on at least a portion of the primer layer, the or each topcoat layer being derived from a topcoat coating composition.

14. A substrate according to claim 12 or 13, wherein the substrate comprises burnable material.

15. Use of a fire resistant aqueous coating composition according to any one of claims 1 to 11 to reduce the burnability of a burnable substrate.
